(19) **Europäisches Patentamt / European Patent Office / Office européen des brevets**

(11) **EP 2 123 102 B1**

(12) **EUROPEAN PATENT SPECIFICATION**

(45) Date of publication and mention
of the grant of the patent:
**08.04.2015 Bulletin 2015/15**

(21) Application number: **08705309.6**

(22) Date of filing: **14.01.2008**

(51) Int Cl.:
**H04W 36/00** *(2009.01)*    **H04W 74/08** *(2009.01)*

(86) International application number:
**PCT/SE2008/050037**

(87) International publication number:
**WO 2008/115122 (25.09.2008 Gazette 2008/39)**

(54) **Random access aligned handover**

Zufallszugriff-abgestimmte Weiterreichung

Transfert aligné à accès aléatoire

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.03.2007 SE 0700726**

(43) Date of publication of application:
**25.11.2009 Bulletin 2009/48**

(73) Proprietor: **Telefonaktiebolaget LM Ericsson
(publ)
164 83 Stockholm (SE)**

(72) Inventors:
 • **LINDSTRÖM, Magnus**
  **S-163 41 Spånga (SE)**
 • **BEMING, Per**
  **S-113 26 Stockholm (SE)**
 • **MILDH, Gunnar**
  **S-191 62 Sollentuna (SE)**
 • **BERGSTRÖM, Joakim**
  **S-114 30 Stockholm (SE)**
 • **MÜLLER, Walter**
  **S-194 62 Upplands Väsby (SE)**

(74) Representative: **Kühn, Friedrich Heinrich et al
Ericsson AB
Patent Unit LTE
Torshamnsgatan 23
164 80 Stockholm (SE)**

(56) References cited:
 **EP-A1- 1 909 523       WO-A1-2007/149013
 WO-A2-2006/100240    US-A1- 2006 092 880**

• **FUJITSU: "Random access for less-contention-based handover", 3GPP DRAFT; R1-062893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103377, [retrieved on 2006-10-04]**
• **TEXAS INSTRUMENTS INC: "Reducing Handover Latencies using early RACH access in LTE", 3GPP DRAFT; R2-061946_REDUCING_HANDOVER_LATENCIES_TI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060621, 21 June 2006 (2006-06-21), XP050141977, [retrieved on 2006-06-21]**
• **HUAWEI: "Uplink Timing Acquisition in LTE Handover", 3GPP DRAFT; R2-062016 UL TIMING ACQUISITION IN LTE HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060627, 27 June 2006 (2006-06-27), XP050142036, [retrieved on 2006-06-27]**

**(Cont. next page)**

- INTERDIGITAL: "Minimizing the Non-synchronized RACH Procedure Requirement during LTE Handover", 3GPP DRAFT; R1-070163, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20070110, 10 January 2007 (2007-01-10), XP050104209, [retrieved on 2007-01-10]
- ALCATEL: "Reduction of the Handover Interruption Time", 3GPP DRAFT; R2-061910_REDUCTION OF THE HANDOVER INTERRUPTION TIME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060621, 21 June 2006 (2006-06-21), XP050141943, [retrieved on 2006-06-21]
- FUJITSU: 'Random access for less-contention-based handover' 3GPP TSG-RAN-WG1 MEETING #46BIS, SEOUL, KOREA, [Online] vol. R1-062893, 09 October 2006 - 13 October 2006, XP003022788 Retrieved from the Internet: <URL:http://www.3gpp1.org/ftp/tsg_ran/WG1_R L1/TSGR_46bis/Docs/R1-062893.zip>

**Description**

**TECHNICAL FIELD**

The present invention relates generally to handover of a mobile device, and more particularly, to handover interrupt times.

**BACKGROUND**

A handover is a procedure used in communication networks to transfer control of a mobile device from one base station or access point to another as the mobile device moves between cells in the network. Conventionally, the mobile device measures the signal strength from the serving base station and one or more neighboring base stations and sends signal strength measurement reports to a mobility management entity. The mobility management entity determines when to handover and sends the mobile device a handover command to trigger the handover. In a "hard" handover, the mobile device disconnects from the serving base station before establishing a connection with the target base station. Once the mobile device's connection with the serving base station is terminated, the mobile device cannot send or receive data until it establishes a connection with the target base station. The time period when the mobile device is unable to send or receive data is referred to as the handover interruption.

The mobile device will typically execute a random access procedure at a random access opportunity to acquire service with the target base station. In some systems, random access opportunities occur at predetermined intervals of time. After disconnecting from the serving base station, the mobile device waits for the next random access opportunity to make a random access attempt with the target base station. The period from the time when the mobile device disconnects from the serving base station until it can make a random access attempt will vary depending on when the handover command is received. The wait may vary between 0 and $T_{RA}$, where $T_{RA}$ is the maximum interval between two consecutive random access opportunities. The mobile device will be without service during this waiting period.

FUJITSU: "Random access for less-contention-based handover", 3GPP DRAFT; R1-062893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103377, [retrieved on 2006-10-04] discloses a less-contention handover scheme providing a short handover time. In the scheme provided, UpLink (UL) radio resources for handover UEs are located at a predefined time-offset from a DownLink (DL) Synchronisation CHannel (SCH) position. The location is common to all cells. Upon the detection of DL SCH, the handover UE may implicitly know where the UL radio resources for the initial and re-attempt access signals exist.

TEXAS INSTRUMENTS INC: "Reducing Handover Latencies using early RACH access in LTE", 3GPP DRAFT; R2-061946_REDUCING_HANDOVER_LATENCIES_TI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060621, 21 June 2006 (2006-06-21), XP050141977, [retrieved on 2006-06-21] discloses a method to reduce the latencies in handovers. This method involves initiating the unsynchronized random access earlier than when the handover command is issued to the UE. The disclosed method allows the UE to achieve the timing advance information and have a few allocations in the future to wait for the handover command and begin UL transmissions in the target eNB as soon as the handover command is received.

HUAWEI: "Uplink Timing Acquisition in LTE Handover", 3GPP DRAFT; R2-062016 UL TIMING ACQUISITION IN LTE HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060627, 27 June 2006 (2006-06-27), XP050142036, [retrieved on 2006-06-27] discloses a scheme to get UL timing synchronization in handover based on an existing UL synchronization maintenance signal. The scheme aims at achieving a short handover delay by avoiding using the contention-based source to acquire UL timing synchronization in a target cell.

INTERDIGITAL: "Minimizing the Non-synchronized RACH Procedure Requirement during LTE Handover", 3GPP DRAFT; R1-070163, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG1, no. Sorrento, Italy; 20070110, 10 January 2007 (2007-01-10), XP050104209, [retrieved on 2007-01-10] discloses a method comprising to eliminate the requirement for a non-synchronized random access procedure during LTE handover when UE autonomous timing advance adjustment is possible, so that initial access in a target cell may apply either to the UL shared channel, or the synchronized random access procedure. The proposed procedure aims at reducing the target cell access latency, interruption in on going transmissions, and unnecessary radio resource demands.

ALCATEL: "Reduction of the Handover Interruption Time", 3GPP DRAFT; R2-061910_REDUCTION OF THE HANDOVER INTERRUPTION TIME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060621, 21 June 2006 (2006-06-21), XP050141943, [retrieved on 2006-06-21] discloses an additional method aimed at obtaining shorter interruption times for downlink and uplink data during handover.

## SUMMARY

The present invention provides a method according to Claim 1 and a processor according to Claim 16 for reducing the handover interruption when a mobile device needs to execute a random access procedure to obtain service with a target access point. According to various embodiments, the timing of random access opportunities in the target cell are considered in determining the start time for a handover. According to one exemplary embodiment, a method for reducing the handover interruption comprises determining a time offset associated with a random access opportunity in the target cell, and determining a start time for handover based on the time offset. In this manner, the start time for the handover may be delayed until just before the random access opportunity to reduce the handover interruption. In one exemplary embodiment, the target access point in the target cell may send the time offset to a serving access point or a mobility management entity, which then computes the start time for the handover and includes the start time in a handover command. In another exemplary embodiment, the target access point in the target cell may send the time offset to the mobile device, which may compute the start time for the handover. In either case, the mobile device delays execution of the handover until the computed start time.

Even though embodiments have been summarized above, the claimed embodiments are defined by the accompanying claims 1-19.

## BRIEF DESCRIPTION OF THE DRAWINGS

Figure 1 shows an exemplary wireless network according to the present invention.
Figure 2 shows an exemplary process for executing handover at a desired start time according to the present invention.
Figure 3 shows one exemplary handover process according to the present invention.
Figure 4 shows another exemplary handover process according to the present invention.
Figure 5 shows another exemplary handover process according to the present invention.
Figure 6 shows another exemplary handover process according to the present invention.
Figure 7 shows another exemplary handover process according to the present invention.

## DETAILED DESCRIPTION

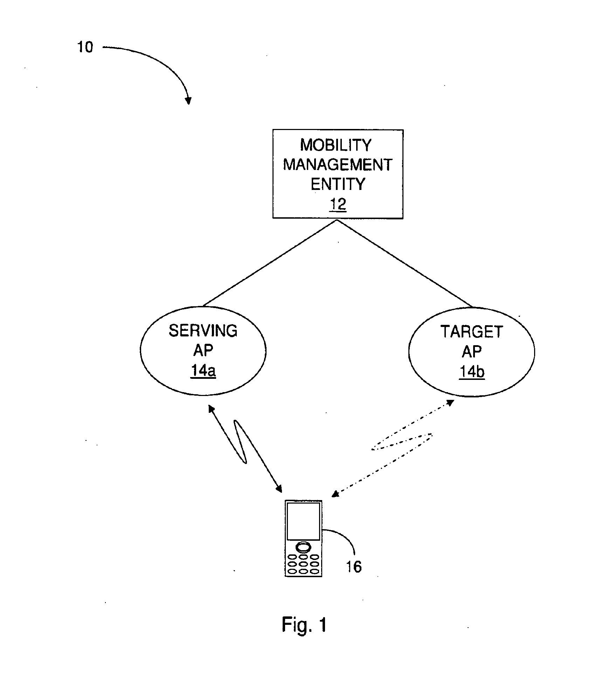

Figure 1 shows the main elements of an exemplary wireless network 10 involved in a mobile-assisted handover. A mobile device 16 is currently served by an access point (AP) 14 referred to herein as the serving AP 14a. The mobile device 16 is moving in a direction toward a neighboring AP 14 referred to herein as the target AP 14b. While transmitting data to and receiving data from the serving AP 14a, the mobile device 16 measures the signal strength of signals received from the serving AP 14a and the target AP 14b. The mobile device 16 provides the signal strength measurements to a mobility management entity 12. Based on the signal strength measurements, the mobility management entity 12 determines when to handover control of the mobile device 16 to the target AP 14b and sends a handover message to the mobile device 16 to trigger the handover. While Figure 1 shows a mobility management entity 12 separate from the APs 14, it will be appreciated that the mobility management entity may be co-located with one or more of the APs 14.

For a "hard" handover, mobile device 16 disconnects from the serving AP 14a at a handover start time $t_{start}$ before establishing a connection with the target AP 14b. Once the mobile device's connection with the serving AP 14a is terminated, the mobile device 16 cannot transmit or receive data until it establishes a new connection with the target AP 14b at the handover end time $t_{end}$. The time period where the mobile device 16 is unable to transmit or receive data is referred to as a handover interruption $T_{int}$ and is defined by:

$$T_{int} = t_{end} - t_{start}. \qquad (1)$$

Mobile device 16 often executes a random access procedure as part of the handover process. Thus, after initiating handover at $t_{start}$, mobile device 16 waits for the next random access opportunity associated with the target AP 14b. At the next random access opportunity, which is designated by $t_2$, mobile device 16 executes the random access procedure to complete the handover. After handover is complete, mobile device 16 may resume data communications.

The waiting period between the beginning of handover at $t_{start}$ and the next random access procedure at $t_2$ is

represented by $T_{wait}$ and is defined by:

$$T_{wait} = t_2 - t_{start} .\qquad\qquad(2)$$

This waiting period $T_{wait}$, may range between 0 and $T_{RA}$, where $T_{RA}$ is the maximum interval between two consecutive random access opportunities.

The present invention reduces the handover interruption $T_{int}$ by reducing the duration of the waiting period $T_{wait}$. The timing of random access opportunities in the target AP 14b are taken into account when determining the start time for a handover. More particularly, the present invention generally aligns the beginning of handover execution ($t_{start}$) with the beginning of a random access procedure ($t_2$) to reduce the waiting period $T_{wait}$. This allows the serving AP 14a to continue serving the mobile device 16 until just before the next random access opportunity.

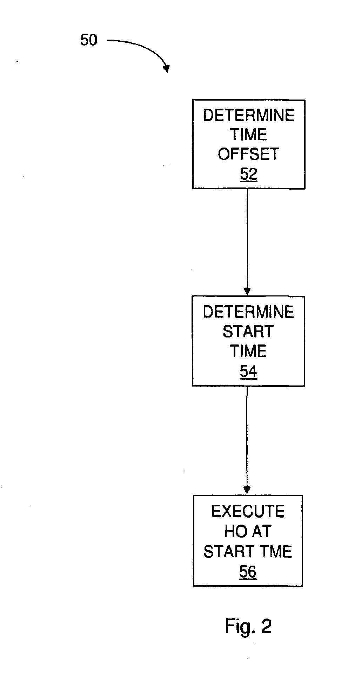

Figure 2 shows one exemplary process 50 for reducing the handover interruption. When handover is desired, the time offset associated with the next random access opportunity is determined at the target AP 14b (block 52). The time offset may comprise the timing of the next random access opportunity relative to the frame timing of the target AP 14b. Based on the time offset, a handover start time $t_{start}$ is determined (block 54), and handover is executed at the determined start time $t_{start}$ (block 56). By delaying the beginning of the handover procedure until the determined start time $t_{start}$, the present invention reduces the handover interruption to generally exclude $T_{wait}$ and to generally include only that time needed to implement the random access procedure. In other words, delaying handover until the determined start time $t_{start}$ enables the mobile device 16 to participate in data communications right up until the next random access opportunity.

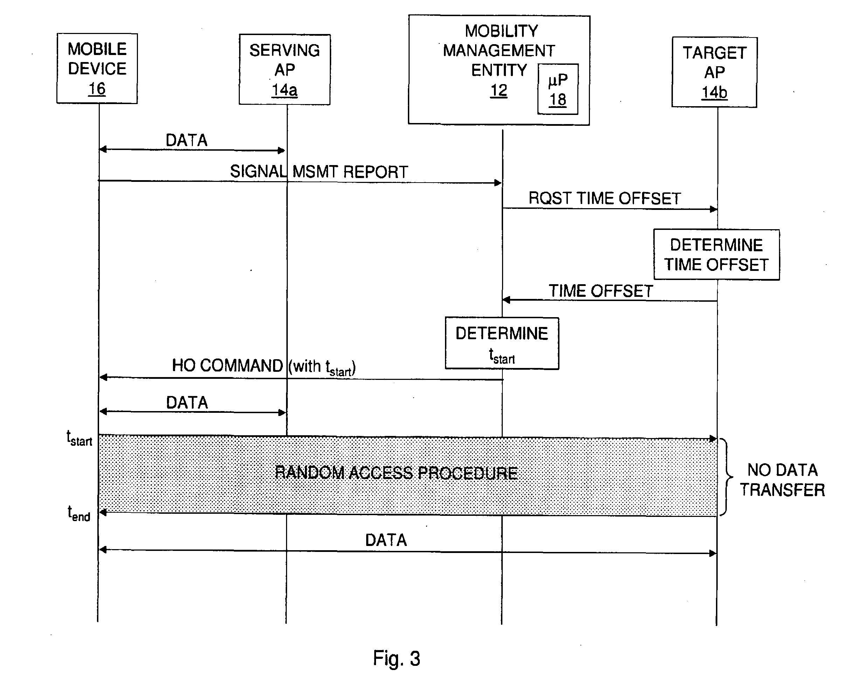

Figure 3 shows one exemplary embodiment of the present invention where a processor 18 in the mobility management entity 12 determines the start time $t_{start}$ based on the time offset when the frame timing of the serving and target APs 14a, 14b are synchronous. After the mobility management entity 12 determines that handover is required based on a signal strength measurement report provided by the mobile device 16, the mobility management entity 12 requests a time offset from the target AP 14b. The target AP 14b determines the time offset by comparing the beginning of the next random access opportunity to the frame timing of the target AP 14b, and sends the time offset to the mobility management entity 12. Based on the received time offset, processor 18 determines the handover start time $t_{start}$. The mobility management entity 12 triggers handover by sending the mobile device 16 a handover message that designates the determined start time $t_{start}$ as the start time for the handover. The mobile device 16 executes the handover at the designated start time to generally align handover execution with the random access procedure. Alternatively, the mobility management entity 12 may send the mobile device 16 the handover message at the determined start time $t_{start}$ where the mobile device 16 executes the handover upon receipt of the handover message. In so doing, the present invention delays the cessation of data communications between the mobile device 16 and the serving AP 14a until right before the random access procedure begins. Data communications may resume between the mobile device 16 and the target AP 14b any time after $t_{end}$.

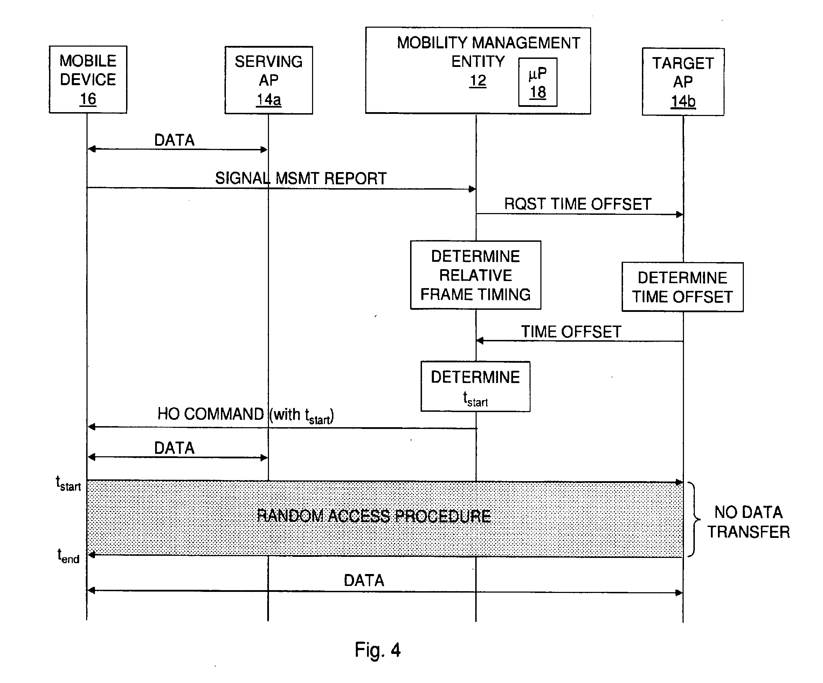

Figure 4 shows another exemplary embodiment of the present invention where the processor 18 in the mobility management entity 12 determines the start time $t_{start}$ based on the time offset when the frame timing of the serving and target APs 14a, 14b are non-synchronous. After the mobility management entity 12 determines that handover is required based on a signal strength measurement report provided by the mobile device 16, the mobility management entity 12 requests a time offset from the target AP 14b. The target AP 14b determines the time offset and sends the time offset to the mobility management entity 12. The processor 18 determines a relative frame timing between the serving and target APs 14. For example, the processor 18 may compare the frame timing of the serving AP 14a to the frame timing of the target AP 14b to determine the relative frame timing offset between the two APs 14. Alternatively, the processor 18 may determine the relative frame timing by receiving the relative frame timing from the mobile device 16. Based on the time offset received from the target AP 14b and the relative frame timing, the processor 18 determines the handover start time $t_{start}$. The mobility management entity 12 triggers handover by sending the mobile device 16 a handover message that designates the determined start time $t_{start}$ as the start time for the handover. The mobile device 16 executes the handover at the designated start time to generally align handover execution with the random access procedure. Alternatively, the mobility management entity 12 may send the mobile device 16 the handover message at the determined start time $t_{start}$, where the mobile device executes handover upon receipt of the handover message. Data communications may resume between mobile device 16 and target AP 14b any time after $t_{end}$.

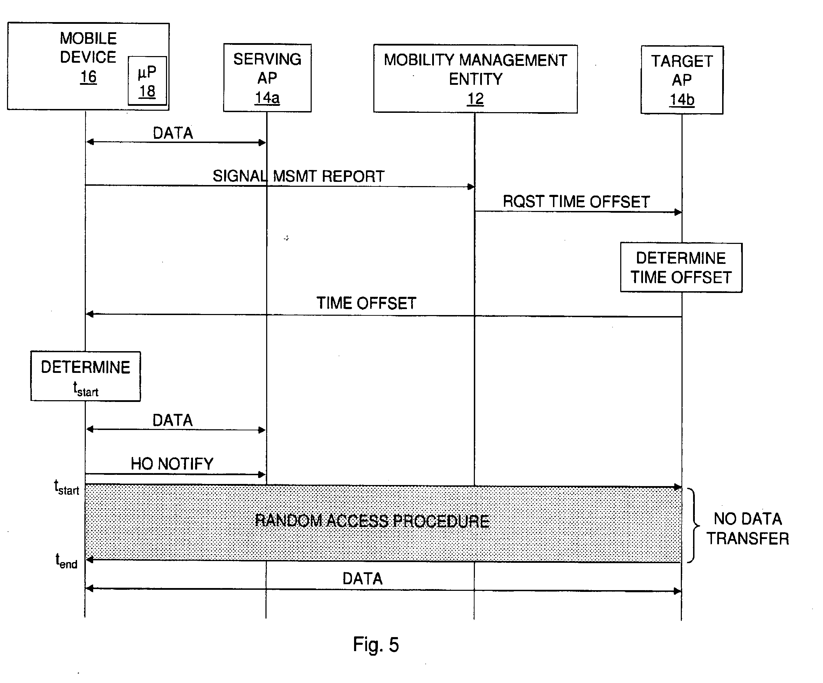

Figure 5 shows another exemplary embodiment of the present invention where a processor 18 in the mobile device 16 determines the start time $t_{start}$ based on the time offset when the frame timing of the serving and target APs 14a, 14b are non-synchronous. After the mobility management entity 12 determines that handover is required based on a signal strength measurement report provided by the mobile device 16, the mobility management entity 12 requests a time offset from the target AP 14b. The target AP 14b determines the time offset and sends the time offset to the mobile device 16. The target AP 14b may broadcast the time offset to the mobile device 16 or may communicate the time offset to the mobile device 16 as an information element included in a handover trigger sent to the mobile device 16 via the mobility management entity 12 and the serving AP 14a. Based on the time offset received from the target AP 14b, processor 18 determines the handover start time $t_{start}$ and autonomously executes handover at the determined start time $t_{start}$. The mobile device 16 explicitly or implicitly notifies the serving AP 14a of the handover. Data communications may resume between the mobile device 16 and the target AP 14b any time after $t_{end}$.

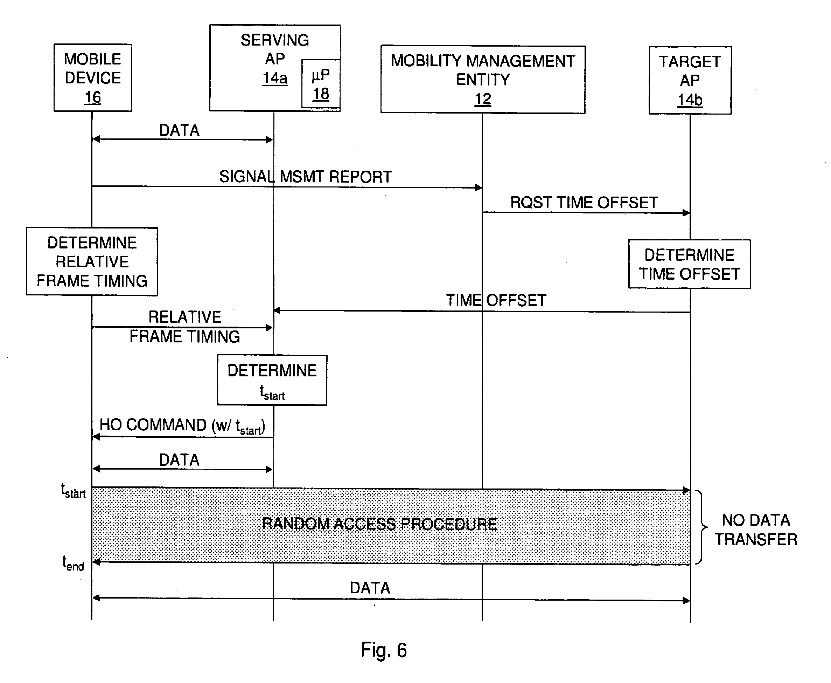

Figure 6 shows another exemplary embodiment of the present invention where a processor 18 in the serving AP 14a determines the start time $t_{start}$ based on the time offset when the frame timing of the serving and target APs 14a, 14b are non-synchronous. After the mobility management entity 12 determines that handover is required based on a signal strength measurement report provided by the mobile device 16, the mobility management entity 12 requests a time offset from the target AP 14b. The target AP 14b determines the time offset and sends the time offset to the serving AP 14a. In addition, the mobile device 16 determines a relative frame timing between the serving and target APs 14, and sends the relative frame timing to the serving AP 14a. For example, the mobile device 16 may compare the frame timing of the serving AP 14a to the frame timing of the target AP 14b to determine the relative frame timing offset between the APs 14. Based on the time offset received from the target AP 14b and the relative frame timing received from the mobile device 16, processor 18 determines the handover start time $t_{start}$. The serving AP 14a triggers handover by sending the mobile device 16 a handover message that designates the determined start time $t_{start}$ as the start time for the handover. The mobile device 16 executes the handover at the designated start time to generally align handover execution with the random access procedure. Alternatively, the serving AP 14a may send mobile device 16 the handover message at the determined start time $t_{start}$, where the mobile device 16 executes the handover upon receipt of the handover message. Data communications may resume between the mobile device 16 and the target AP 14b any time after $t_{end}$.

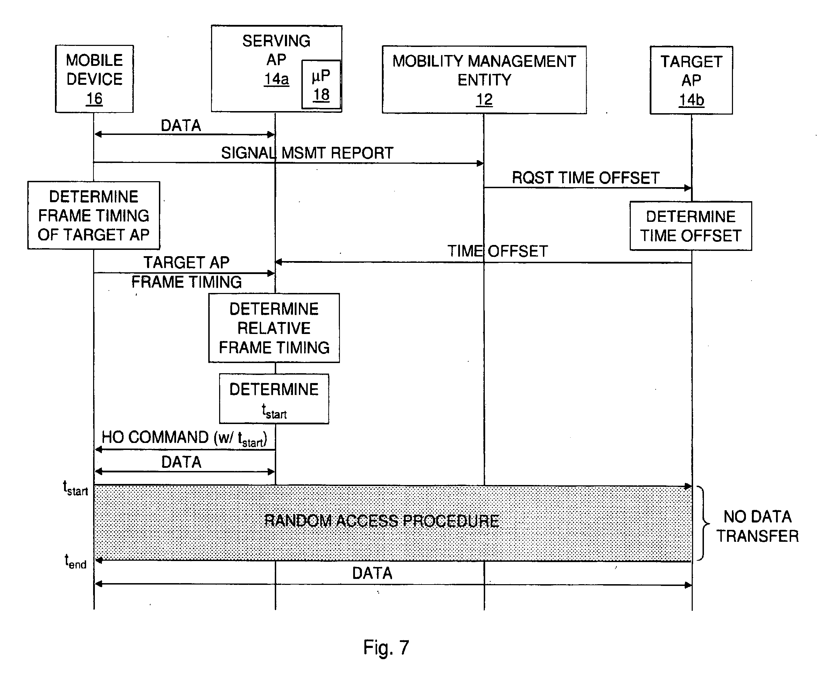

Figure 7 shows another exemplary embodiment of the present invention where the processor 18 in the serving AP 14a determines the start time $t_{start}$ based on the time offset when the frame timing of the serving and target APs 14a, 14b are non-synchronous. After the mobility management entity 12 determines that handover is required based on a signal strength measurement report provided by the mobile device 16, the mobility management entity 12 requests a time offset from the target AP 14b. The target AP 14b determines the time offset and sends the time offset to the serving AP 14a. In addition, the mobile device 16 determines a frame timing of the target AP 14b relative to a reference frame time known to the serving AP 14a, and sends the determined target AP frame timing to the serving AP 14a. The processor 18 determines the relative frame timing between the serving AP 14a and the target AP 14b based on its own frame timing and the received target AP frame timing. Based on the time offset received from the target AP 14b and the determined relative frame timing, processor 18 determines the handover start time $t_{start}$. The serving AP 14a triggers handover by sending the mobile device 16 a handover message that designates the determined start time $t_{start}$ as the start time for the handover. The mobile device 16 executes the handover at the designated start time to generally align handover execution with the random access procedure. Alternatively, the mobility management entity 12 may send the mobile device 16 the handover message at the determined start time $t_{start}$, where the mobile device 16 executes the handover upon receipt of the handover message. Data communications may resume between the mobile device 16 and the target AP 14b any time after $t_{end}$.

While the present invention was described in the context of mobile-assisted handover, it will be appreciated that the present invention also applies to other forms of handover, including handover autonomously executed by the mobile device 16. For example, the after the mobile device 16 determines that handover is required based on received signal strength measurements, the mobile device 16 may request a time offset from the target AP 14b. Based on the time offset provided by the target AP 14b, a processor 18 in the mobile device 16 determines the handover start time $t_{start}$ and autonomously executes the handover at the determined start time $t_{start}$.

The present invention reduces handover interruption by delaying the start of the handover execution until just before a random access opportunity in a target cell containing a target access point. Thus, the waiting period $T_{wait}$ is reduced. The mobile device 16 may therefore continue to send and receive data until the start of the random access procedure.

## Claims

1. A method of reducing service interruptions during handover of a mobile device (16) in a wireless network (10), the method being performed in a network element (12, 16, 14a) and **characterized by** comprising:

    determining (54) a start time for executing handover of the mobile device (16) from a serving Access Point, AP, (14a) to a target AP (14b), the determining (54) being based on a time offset, the time offset being associated with a next random access opportunity associated with the target AP (14b), wherein the time offset comprises an offset between the random access opportunity and a frame timing of the target AP (14b), wherein the mobile device's (16) connection with the serving AP (14a) is terminated at the start time, and wherein the start time is aligned with the beginning of a random access procedure at the random access opportunity.

2. The method of claim 1 wherein determining (54) the start time comprises determining the start time at a mobility management entity (12).

3. The method of claim 2 further comprising sending a handover message including the determined start time from the mobility management entity (12) to the mobile device (16) to instruct the mobile device (16) to execute handover at the determined start time.

4. The method of claim 2 further comprising sending a handover message from the mobility management entity (12) to the mobile device (16) at the determined start time to instruct the mobile device (16) to execute handover upon receipt of the handover message.

5. The method of claim 2 wherein determining (54) the start time comprises:

   receiving the time offset from the target AP (14b) at the mobility management entity (12); and
   determining the start time at the mobility management entity (12) based on the received time offset.

6. The method of claim 5 wherein determining (54) the start time further comprises:

   determining a relative frame timing at the mobility management entity (12), wherein the relative frame timing relates a frame timing of the target AP (14b) to a frame timing of the serving AP (14a); and
   determining the start time at the mobility management entity (12) based on the relative frame timing and the received time offset.

7. The method of claim 6 wherein determining the relative frame timing comprises receiving at the mobility management entity (12) the relative frame timing from the mobile device (16).

8. The method of claim 1 wherein determining the start time (54) comprises determining the start time at the mobile device (16).

9. The method of claim 8 further comprises determining the time offset and wherein determining the time offset comprises receiving the time offset from the target AP (14b) at the mobile device (16), and wherein determining (54) the start time comprises determining the start time based on the received time offset.

10. The method of claim 8 further comprising executing (56) the handover at the mobile device (16) at the determined start time.

11. The method of claim 1 wherein determining (54) the start time comprises determining the start time at the serving AP (14a).

12. The method of claim 11 further comprising sending a handover message including the determined start time from the serving AP (14a) to the mobile device (16) to instruct the mobile device (16) to execute handover at the determined start time.

13. The method of claim 11 further comprising sending a handover message from the serving AP (14a) to the mobile device (16) at the determined start time to instruct the mobile device (16) to execute handover upon receipt of the handover message.

14. The method of claim 11 wherein determining (54) the start time comprises:

   receiving a relative frame timing from the mobile device (16) at the serving AP (14a), wherein the relative frame timing relates a frame timing of the target AP (14b) to a frame timing of the serving AP (14a);
   receiving the time offset from the target AP (14b) at the serving AP (14a); and
   determining the start time at the serving AP (14a) based on the received relative frame timing and the received time offset.

**15.** The method of claim 11 wherein determining (54) the start time comprises:

receiving from the mobile device (16) at the serving AP (14a) a frame timing of the target AP (14b) relative a reference time known to the serving AP (14a);

determining a relative frame timing, wherein the relative frame timing relates the received frame timing of the target AP (14b) to a frame timing of the serving AP (14a);

receiving the time offset from the target AP (14b) at the serving AP (14a); and

determining the start time at the serving AP (14a) based on the relative frame timing and the received time offset.

**16.** A processor (18) comprised in a network element (12, 16, 14a) of a wireless network (10) said processor (18) being **characterized in** being configured to:

determine (54) a start time for executing handover of a mobile device (16) from a serving Access Point, AP, (14a) to a target AP (14b) based on a time offset being associated with a next random access opportunity associated with the target AP (14b), wherein the time offset comprises an offset between the random access opportunity and a frame timing of the target AP (14b), and to align the start time with the beginning of a random access procedure at the random access opportunity, to thereby cause that the mobile device's (16) connection with the serving AP (14a) be terminated at the start time.

**17.** The processor (18) of claim 16, wherein the network element (12, 16, 14a) comprises a mobility management entity (12).

**18.** The processor (18) of claim 16, wherein the network element (12, 16, 14a) comprises the mobile device (16).

**19.** The processor (18) of claim 16, wherein the network element (12, 16, 14a) comprises the serving AP (14a).


**Patentansprüche**

**1.** Verfahren zur Reduzierung von Dienstunterbrechungen während der Weiterreichung eines mobilen Geräts (16) in einem drahtlosen Netzwerk (10), wobei das Verfahren in einem Netzwerkelement (12, 16, 14a) durchgeführt wird, das **dadurch gekennzeichnet** ist, dass es Folgendes umfasst:

Bestimmen (54) einer Startzeit für die Durchführung der Weiterreichung des mobilen Geräts (16) von einem Bedienungs-Access Point, AP, (14a), zu einem Ziel-AP (14b), wobei das Bestimmen (54) auf einem Zeitversatz basiert, wobei der Zeitversatz mit einer nächsten Zufallszugriffsmöglichkeit assoziiert ist, die mit dem Ziel-AP (14b) assoziiert ist, wobei der Zeitversatz einen Versatz zwischen der Zufallszugriffsmöglichkeit und einem Rahmentakt des Ziel-AP (14b) umfasst, wobei die Verbindung des mobilen Geräts (16) mit dem Bedienungs-AP (14a) zur Startzeit beendet ist, und wobei die Startzeit mit dem Beginn eines Zufallszugriffsverfahrens bei der Zufallszugriffsmöglichkeit abgestimmt ist.

**2.** Verfahren nach Anspruch 1, wobei das Bestimmen (54) der Startzeit das Bestimmen der Startzeit bei einer Mobilitätsverwaltungseinheit (12) umfasst.

**3.** Verfahren nach Anspruch 2, weiter umfassend das Senden einer Weiterreichungsnachricht, die die bestimmte Startzeit umfasst, von der Mobilitätsverwaltungseinheit (12) an das mobile Gerät (16), um das mobile Gerät (16) anzuweisen, die Weiterreichung zur bestimmten Startzeit durchzuführen.

**4.** Verfahren nach Anspruch 2, weiter umfassend das Senden einer Weiterreichungsnachricht von der Mobilitätsverwaltungseinheit (12) an das mobile Gerät (16) zur bestimmten Startzeit, um das mobile Gerät (16) anzuweisen, die Weiterreichung beim Erhalt der Weiterreichungsnachricht durchzuführen.

**5.** Verfahren nach Anspruch 2, wobei die Bestimmung (54) der Startzeit Folgendes umfasst:

Erhalten des Zeitversatzes vom Ziel-AP (14b) an der Mobilitätsverwaltungseinheit (12); und
Bestimmen der Startzeit an der Mobilitätsverwaltungseinheit (12) basierend auf dem erhaltenen Zeitversatz.

**6.** Verfahren nach Anspruch 5, wobei die Bestimmung (54) der Startzeit weiter Folgendes umfasst:

Bestimmen eines relativen Rahmentakts an der Mobilitätsverwaltungseinheit (12), wobei der relative Rahmentakt einen Rahmentakt des Ziel-AP (14b) mit einem Rahmentakt der Bedienungs-AP (14a) verknüpft; und Bestimmen der Startzeit an der Mobilitätsverwaltungseinheit (12) basierend auf dem relativen Rahmentakt und dem erhaltenen Zeitversatz.

7. Verfahren nach Anspruch 6, wobei das Bestimmen des relativen Rahmentakts den Erhalt an der Mobilitätsverwaltungseinheit (12) des relativen Rahmentakts vom mobilen Gerät (16) umfasst.

8. Verfahren nach Anspruch 1, wobei das Bestimmen der Startzeit (54) das Bestimmen der Startzeit am mobilen Gerät (16) umfasst.

9. Verfahren nach Anspruch 8, weiterhin umfassend das Bestimmen des Zeitversatzes, und wobei das Bestimmen des Zeitversatzes den Erhalt des Zeitversatzes vom Ziel-AP (14b) am mobilen Gerät (16) umfasst, und wobei das Bestimmen (54) der Startzeit das Bestimmen die Startzeit basierend auf dem erhaltenen Zeitversatz umfasst.

10. Verfahren nach Anspruch 8, weiter umfassend das Durchführen (56) der Weiterreichung am mobilen Gerät (16) zur bestimmten Startzeit.

11. Verfahren nach Anspruch 1, wobei das Bestimmen (54) der Startzeit das Bestimmen der Startzeit am Bedienungs-AP (14a) umfasst.

12. Verfahren nach Anspruch 11, weiter umfassend das Senden einer Weiterreichungsnachricht, die die bestimmte Startzeit umfasst, von der Bedienungs-AP (14a) an das mobile Gerät (16), um das mobile Gerät (16) anzuweisen, die Weiterreichung zur bestimmten Startzeit durchzuführen.

13. Verfahren nach Anspruch 11, weiter umfassend das Senden einer Weiterreichungsnachricht von der Bedienungs-AP (14a) an das mobile Gerät (16) zur bestimmten Startzeit, um das mobile Gerät (16) anzuweisen, die Weiterreichung beim Erhalt der Weiterreichungsnachricht durchzuführen.

14. Verfahren nach Anspruch 11, wobei die Bestimmung (54) der Startzeit Folgendes umfasst:

Erhalten eines relativen Rahmentakts vom mobilen Gerät (16) am Bedienungs-AP (14a), wobei der relative Rahmentakt einen Rahmentakt des Ziel-AP (14b) mit einem Rahmentakt der Bedienungs-AP (14a) verknüpft; Erhalten des Zeitversatzes vom Ziel-AP (14b) am Bedienungs-AP (14a); und Bestimmen der Startzeit am Bedienungs-AP (14a) basierend auf dem erhaltenen relativen Rahmentakt und dem erhaltenen Zeitversatz.

15. Verfahren nach Anspruch 11, wobei die Bestimmung (54) der Startzeit Folgendes umfasst:

Erhalten vom mobilen Gerät (16) am Bedienungs-AP (14a) eines Rahmentakts vom Ziel-AP (14b) mit Bezug auf eine Referenzzeit, die dem Bedienungs-AP (14a) bekannt ist; Bestimmen eines relativen Rahmentakts, wobei der relative Rahmentakt den erhaltenen Rahmentakt des Ziel-AP (14b) mit einem Rahmentakt des Bedienungs-AP (14a) verknüpft; Erhalten des Zeitversatzes vom Ziel-AP (14b) am Bedienungs-AP (14a); und Bestimmen der Startzeit am Bedienungs-AP (14a) basierend auf dem relativen Rahmentakt und dem erhaltenen Zeitversatz.

16. Prozessor (18), enthalten in einem Netzwerkelement (12, 16, 14a) von einem drahtlosen Netzwerk (10), wobei der Prozessor (18) **dadurch gekennzeichnet** ist, dass er konfiguriert ist, um:

eine Startzeit (54) für die Durchführung der Weiterreichung eines mobilen Geräts (16) von einem Bedienungs-Access Point, AP, (14a), zu einem Ziel-AP (14b), basierend auf einem Zeitversatz durchzuführen, der mit einer nächsten Zufallszugriffsmöglichkeit assoziiert ist, die mit dem Ziel-AP (14b) assoziiert ist, wobei der Zeitversatz einen Versatz zwischen der Zufallszugriffsmöglichkeit und einem Rahmentakt des Ziel-AP (14b) umfasst, und um die Startzeit mit dem Beginn eines Zufallszugriffsverfahrens bei der Zufallszugriffsmöglichkeit abzustimmen, um dadurch zu verursachen, dass die Verbindung des mobilen Geräts (16) mit dem Bedienungs-AP (14a) zur Startzeit beendet ist.

**17.** Prozessor (18) nach Anspruch 16, wobei das Netzwerkelement (12, 16, 14a) eine Mobilitätsverwaltungseinheit (12) umfasst.

**18.** Prozessor (18) nach Anspruch 16, wobei das Netzwerkelement (12, 16, 14a) das mobile Gerät (16) umfasst.

**19.** Prozessor (18) nach Anspruch 16, wobei das Netzwerkelement (12, 16, 14a) den Bedienungs-AP (14a) umfasst.


**Revendications**

**1.** Procédé de réduction d'interruptions de service au cours d'un transfert intercellulaire d'un dispositif mobile (16) dans un réseau sans fil (10), le procédé étant mis en oeuvre dans un élément de réseau (12, 16, 14a) et **caractérisé en ce qu'**il comprend les étapes ci-dessous consistant à :

   déterminer (54) un instant de début pour exécuter un transfert intercellulaire du dispositif mobile (16), d'un point d'accès de desserte, AP, (14a) à un point AP cible (14b), la détermination (54) étant basée sur un décalage temporel, le décalage temporel étant associé à une occasion d'accès aléatoire successive associée au point AP cible (14b), dans lequel le décalage temporel comprend un décalage entre l'occasion d'accès aléatoire et une temporisation de trame du point AP cible (14b), dans lequel la connexion du dispositif mobile (16) avec le point AP de desserte (14a) se termine à l'instant de début, et dans lequel l'instant de début est aligné sur le début d'une procédure d'accès aléatoire à l'occasion d'accès aléatoire.

**2.** Procédé selon la revendication 1, dans lequel la détermination (54) de l'instant de début comprend la détermination de l'instant de début au niveau d'une entité de gestion de la mobilité (12).

**3.** Procédé selon la revendication 2, comprenant en outre l'envoi d'un message de transfert intercellulaire incluant l'instant de début déterminé, de l'entité de gestion de la mobilité (12) au dispositif mobile (16), en vue d'ordonner au dispositif mobile (16) d'exécuter le transfert intercellulaire à l'instant de début déterminé.

**4.** Procédé selon la revendication 2, comprenant en outre l'envoi d'un message de transfert intercellulaire, de l'entité de gestion de la mobilité (12) au dispositif mobile (16), à l'instant de début déterminé, en vue d'ordonner au dispositif mobile (16) d'exécuter le transfert intercellulaire suite à la réception du message de transfert intercellulaire.

**5.** Procédé selon la revendication 2, dans lequel la détermination (54) de l'instant de début comprend les étapes ci-dessous consistant à :

   recevoir le décalage temporel, à partir du point AP cible (14b), au niveau de l'entité de gestion de la mobilité (12) ; et
   déterminer l'instant de début, au niveau de l'entité de gestion de la mobilité (12), sur la base du décalage temporel reçu.

**6.** Procédé selon la revendication 5, dans lequel la détermination (54) de l'instant de début comprend en outre les étapes ci-dessous consistant à :

   déterminer une temporisation de trame relative au niveau de l'entité de gestion de la mobilité (12), dans lequel la temporisation de trame relative associe une temporisation de trame du point AP cible (14b) à une temporisation de trame du point AP de desserte (14a) ; et
   déterminer l'instant de début, au niveau de l'entité de gestion de la mobilité (12), sur la base de la temporisation de trame relative et du décalage temporel reçu.

**7.** Procédé selon la revendication 6, dans lequel la détermination de la temporisation de trame relative comprend la réception, au niveau de l'entité de gestion de la mobilité (12), de la temporisation de trame relative à partir du dispositif mobile (16).

**8.** Procédé selon la revendication 1, dans lequel la détermination de l'instant de début (54) comprend la détermination de l'instant de début au niveau du dispositif mobile (16).

**9.** Procédé selon la revendication 8, comprenant en outre la détermination du décalage temporel, et dans lequel la détermination du décalage temporel comprend la réception du décalage temporel à partir du point AP cible (14b), au niveau du dispositif mobile (16), et dans lequel la détermination (54) de l'instant de début comprend la détermination de l'instant de début sur la base du décalage temporel reçu.

10. Procédé selon la revendication 8, comprenant en outre l'exécution (56) du transfert intercellulaire au niveau du dispositif mobile (16) à l'instant de début déterminé.

11. Procédé selon la revendication 1, dans lequel la détermination (54) de l'instant de début comprend la détermination de l'instant de début au niveau du point AP de desserte (14a).

12. Procédé selon la revendication 11, comprenant en outre l'envoi d'un message de transfert intercellulaire incluant l'instant de début déterminé, du point AP de desserte (14a) au dispositif mobile (16), en vue d'ordonner au dispositif mobile (16) d'exécuter un transfert intercellulaire à l'instant de début déterminé.

13. Procédé selon la revendication 11, comprenant en outre l'envoi d'un message de transfert intercellulaire, du point AP de desserte (14a) au dispositif mobile (16), à l'instant de début déterminé, en vue d'ordonner au dispositif mobile (16) d'exécuter un transfert intercellulaire suite à la réception du message de transfert intercellulaire.

14. Procédé selon la revendication 11, dans lequel la détermination (54) de l'instant de début comporte les étapes ci-dessous consistant à :

recevoir une temporisation de trame relative à partir du dispositif mobile (16), au niveau du point AP de desserte (14a), dans lequel la temporisation de trame relative associe une temporisation de trame du point AP cible (14b) à une temporisation de trame du point AP de desserte (14a) ;
recevoir le décalage temporel à partir du point AP cible (14b) au niveau du point AP de desserte (14a) ; et
déterminer l'instant de début, au niveau du point AP de desserte (14a), sur la base de la temporisation de trame relative reçue et du décalage temporel reçu.

15. Procédé selon la revendication 11, dans lequel la détermination (54) de l'instant de début comprend les étapes ci-dessous consistant à :

recevoir, à partir du dispositif mobile (16), au niveau du point AP de desserte (14a), une temporisation de trame du point AP cible (14b) relative à un instant de référence connu du point AP de desserte (14a) ;
déterminer une temporisation de trame relative, dans lequel la temporisation de trame relative associe la temporisation de trame reçue du point AP cible (14b) à une temporisation de trame du point AP de desserte (14a) ;
recevoir le décalage temporel à partir du point AP cible (14b), au niveau du point AP de desserte (14a) ; et
déterminer l'instant de début au niveau du point AP de desserte (14a), sur la base de la temporisation de trame relative et du décalage temporel reçu.

16. Processeur (18) inclus dans un élément de réseau (12, 16, 14a) d'un réseau sans fil (10), ledit processeur (18) étant **caractérisé en ce qu'**il est configuré de manière à :

déterminer (54) un instant de début pour exécuter le transfert intercellulaire d'un dispositif mobile (16), d'un point d'accès de desserte, AP, (14a) à un point AP cible (14b), sur la base d'un décalage temporel qui est associé à une occasion d'accès aléatoire successive associée au point AP cible (14b), dans lequel le décalage temporel comprend un décalage entre l'occasion d'accès aléatoire et une temporisation de trame du point AP cible (14b), et à aligner l'instant de début sur le début d'une procédure d'accès aléatoire, à l'occasion d'accès aléatoire, en vue de provoquer, de ce fait, que la connexion du dispositif mobile (16) avec le point AP de desserte (14a) soit terminée à l'instant de début.

17. Processeur (18) selon la revendication 16, dans lequel l'élément de réseau (12, 16, 14a) comporte une entité de gestion de la mobilité (12).

18. Processeur (18) selon la revendication 16, dans lequel l'élément de réseau (12, 16, 14a) comporte le dispositif mobile (16).

19. Processeur (18) selon la revendication 16, dans lequel l'élément de réseau (12, 16, 14a) comporte le point AP de desserte (14a).

Fig. 1

50

```
┌─────────────┐
│  DETERMINE  │
│    TIME     │
│   OFFSET    │
│     52      │
└─────────────┘
       │
       ▼
┌─────────────┐
│  DETERMINE  │
│    START    │
│    TIME     │
│     54      │
└─────────────┘
       │
       ▼
┌─────────────┐
│   EXECUTE   │
│    HO AT    │
│  START TME  │
│     56      │
└─────────────┘
```

Fig. 2

Fig. 3

MOBILE DEVICE 16

SERVING AP 14a

MOBILITY MANAGEMENT ENTITY 12 | μP 18

TARGET AP 14b

DATA

SIGNAL MSMT REPORT

RQST TIME OFFSET

DETERMINE TIME OFFSET

TIME OFFSET

DETERMINE $t_{start}$

HO COMMAND (with $t_{start}$)

DATA

$t_{start}$

RANDOM ACCESS PROCEDURE

NO DATA TRANSFER

$t_{end}$

DATA

EP 2 123 102 B1

Fig. 4

Fig. 5

Fig. 6

EP 2 123 102 B1

Fig. 7

**REFERENCES CITED IN THE DESCRIPTION**

**Non-patent literature cited in the description**

- Random access for less-contention-based handover. 3GPP DRAFT; R1-062893, 3RD GENERATION PARTNERSHIP PROJECT (3GPP). MOBILE COMPETENCE CENTRE, 04 October 2006, vol. RAN WG1
- Reducing Handover Latencies using early RACH access in LTE. 3GPP DRAFT; R2-061946_REDUCING_HANDOVER_LATENCIES_TI, 3RD GENERATION PARTNERSHIP PROJECT (3GPP). MOBILE COMPETENCE CENTRE, 21 June 2006, vol. RAN WG2
- Uplink Timing Acquisition in LTE Handover. 3GPP DRAFT; R2-062016 UL TIMING ACQUISITION IN LTE HO, 3RD GENERATION PARTNERSHIP PROJECT (3GPP). MOBILE COMPETENCE CENTRE, 27 June 2006, vol. RAN WG2
- Minimizing the Non-synchronized RACH Procedure Requirement during LTE Handover. 3GPP DRAFT; R1-070163, 3RD GENERATION PARTNERSHIP PROJECT (3GPP). MOBILE COMPETENCE CENTRE, 10 January 2007, vol. RAN WG1
- Reduction of the Handover Interruption Time. 3GPP DRAFT; R2-061910_REDUCTION OF THE HANDOVER INTERRUPTION TIME, 3RD GENERATION PARTNERSHIP PROJECT (3GPP). MOBILE COMPETENCE CENTRE, 21 June 2006, vol. RAN WG2